# EUROPEAN PATENT SPECIFICATION

(11) **EP 0 632 084 B1**
(45) Date of publication and mention of the grant of the patent: **01.09.1999**
(21) Application number: 94201828.4
(22) Date of filing: 24.06.1994
(51) Int. Cl.: C08G 67/02

(54) **Copolymers of carbon monoxide and an olefinically unsaturated compound and process for the preparation thereof**
Copolymere von Kohlenmonoxid und einer äthylenisch ungesättigten Verbindung und Verfahren zur Herstellung dieser Copolymere
Copolymères de monoxide de carbone et d'un composé oléfiniquement insaturé et procédé de préparation de ceux-ci

(30) Priority: 29.06.1993 EP 93201894
(43) Date of publication of application: 04.01.1995
(73) Proprietor: SHELL INTERNATIONALE RESEARCH MAATSCHAPPIJ B.V., 2596 HR Den Haag (NL)
(72) Inventor: Drent, Eit, NL-1031 CM Amsterdam (NL); Pello, Dennis Humphrey Louis, NL-1031 CM Amsterdam (NL)

(56) References cited:
- EP-A- 0 280 380
- EP-A- 0 495 547
- GB-A- 1 081 304
- US-A- 3 694 412

## Description

The invention relates to linear copolymers of carbon monoxide and an olefinically unsaturated compound and to a process for the preparation thereof.

EP-A-213671 discloses copolymers of carbon monoxide, ethene and one or more other olefinically unsaturated monomers (A), said copolymer consisting of units -CO-(C₂H₄)- and -CO-(A)- whereby the units -CO-(C₂H₄)- and -CO-(A)- are randomly distributed along the polymer chains. Hence, the copolymer disclosed is a linear alternating copolymer of carbon monoxide on the one hand and ethene or another olefinically unsaturated monomer A on the other hand. The advantage of these polymers as compared to the high molecular weight linear alternating copolymers of carbon monoxide with ethene exclusively resides in a lower melting point, enabling the melt processing of the polymer to take place at a lower temperature. This lower processing temperature in return reduces decomposition and discoloration of the polymer during processing. However, it is a disadvantage that at least one other olefinically unsaturated monomer beside ethene is necessary for preparing the polymers with reduced melting point, so that the total number of olefinically unsaturated monomers is at least two.

The polymers known from EP-A-213671 have good mechanical properties, especially at elevated temperature, and have therefore utility as engineering polymers.

US-A-2495286 and GB-A-1522942 disclose non-alternating copolymers of carbon monoxide and an aliphatic monoolefin, preferably ethene, prepared by using a free radical catalyst, thus accomplishing a free radical polymerization of the said carbon monoxide and aliphatic monoolefin. In the working examples of the U.S. patent copolymers of carbon monoxide and ethene are described having molar ratios ethene to carbon monoxide varying from as low as 1.16:1 to as high as 20:1. The copolymers disclosed in said British Patent Specification have a molar ratio ethene to carbon monoxide of close to unity.

The ethene/carbon monoxide copolymers described in US-A-2495286 and GB-A-1522942 have melting points which are lower than those of corresponding perfectly alternating copolymers. However, it will be appreciated by persons skilled in the art that said copolymers do not have a linear structure but rather a branched one due to the free radical polymerization mechanism. A drawback of polymers having a branched structure is their relatively high melt viscosity and that their melt processing may be seriously hampered. Moreover, well known disadvantages of free radical initiators are that they are storage unstable and that remnants thereof may be present in the prepared polymer, which can be detrimental to the polymer stability.

It would be desirable to obviate the above-mentioned disadvantages associated with the known carbon monoxide based polymers.

EP-A-280380 discloses a process for producing linear alternating copolymers of carbon monoxide and one or more olefinically unsaturated compounds using catalyst compositions based upon a palladium compound and a phosphino-sulphonic acid ligand. The working examples of this European application teach that said linear alternating copolymers can be prepared by applying in the polymerization mixture the olefinically unsaturated compounds at a molar ratio relative to the carbon monoxide of approximately 1:1.

It has now surprisingly been found that linear, non-alternating copolymers of carbon monoxide with an olefinically unsaturated compound can be obtained by a process which involves applying a relatively high molar ratio of olefinically unsaturated monomer relative to carbon monoxide in the polymerization mixture thereby using a catalyst composition as disclosed in EP-A-280380. The polymers thus differ from polymers made by radical polymerization in that they are linear instead of branched. It has further been found they indeed exhibit a lower melting point than the corresponding linear alternating polymers.

Accordingly, the present invention relates to a copolymer of carbon monoxide and one or more olefinically unsaturated compounds, characterized in that the polymer chain is linear and contains monomer units originating in the olefinically unsaturated compound(s) and monomer units originating in carbon monoxide in a molar ratio of from 52.5:47.5 to 80:20, whereby at least in a part of the polymer chain these monomer units are arranged in a random order.

The invention also relates to a process for the preparation of a copolymer of carbon monoxide and one or more olefinically unsaturated compounds, of which copolymer the polymer chain is linear and contains monomer units originating in the olefinically unsaturated compound(s) and monomer units originating in carbon monoxide which are, at least in a part of the polymer chain, arranged in a random order, which process comprises contacting carbon monoxide and one or more olefinically unsaturated compounds in the presence of a catalyst composition comprising:
(a) a source of palladium, and
(b) an anionic phosphorus monodentate ligand of the general formula R₁R₂P-R-X, wherein R₁ and R₂ independently represent optionally polar substituted hydrocarbyl groups, R is a bivalent bridging group having 2 carbon atoms in the bridge and X is an anionic group, which anionic ligand is derived from an acid having a pKa of less than 4,
wherein the molar ratio of carbon monoxide to the olefinically unsaturated compound(s) is in the range of from 1:30 to 1:3 and preferably from 1:15 to 1:5.

With the term "linear" as used throughout this specification in connection with the copolymers is meant that the polymer backbone is substantially free of polymeric side-chains formed during polymerization, i.e. to the extent that such side chains are not detectable by analysis of the virgin polymer powder as obtained from a polymerization reactor. This implies that less than 0.5% of the monomer units originating in an olefinically unsaturated compound carries a polymeric side chain. The linear polymers differ from their branched counter parts in different solubility characteristics.

The fraction of the bonds formed during polymerization between olefinically unsaturated monomers relative to the total number of bonds formed between the monomer molecules gives a clear indication of the non-alternating character of the copolymer. In a perfectly alternating copolymer said fraction -expressed in percent- is zero.

The higher this fraction is, the less likely it will be that the copolymer is semicrystalline or that it resembles a homopolymer of the olefinically unsaturated compound(s), which is at the detriment of its mechanical properties, in particular modulus and strength. On the other hand, when the fraction is low the copolymer will more and more resemble a perfectly alternating copolymer with the corresponding higher melting point. Therefore said fraction is in the range of from 5 to 60%, typically 7 to 40%. These fractions correspond with molar ratios of the monomer units originating in the olefinically unsaturated compound(s) to the monomer units originating in carbon monoxide amounting to from 52.5:47.5 to 80:20 and 53.5:46.5 to 70:30, respectively. Preferably the fraction is such that the copolymers of this invention are semicrystalline polymers having a melting point above 170 °C.

The copolymers have -at least in part- a non-alternating structure which implies that the polymer chains contain entities consisting of two or more olefinically unsaturated monomer units bonded to one another, at each end neighboured by a monomer unit originating in carbon monoxide.

The length of such entities may be determined by the reaction conditions applied during the copolymerization reaction, such as e.g. the molar ratio of olefinically unsaturated compound relative to carbon monoxide.

In one preferred embodiment of the present invention 50 to 95%, more preferably 65 to 85%, of all bonds between monomer units originating in olefinically unsaturated compounds is contained in entities consisting of two of such monomer units. The remaining bonds between monomer units originating in olefinically unsaturated compounds is contained in entities consisting of three or more of said monomer units.

In another preferred embodiment of the present invention, at least one end of the copolymer chain is a homopolymer block of the olefinically unsaturated monomer. A copolymer having one or two of such "endblocks" of homopolymerized olefinically unsaturated monomer can be obtained by e.g. employing at the start and/or end of the polymerization a reaction mixture being essentially free of carbon monoxide. Very suitable copolymers are those containing only one endblock of homopolymerized olefinically unsaturated monomer. Homopolymer end blocks suitably constitute of from 10 to 50% by weight of the total copolymer.

The olefinically unsaturated compounds useful as monomers in the copolymer according to the invention in principle may be any compound containing at least one double bond between two carbon atoms in the molecule, which double bond is susceptible to polymerization. A preferred class of olefinically unsaturated compounds are aliphatic monoolefins and in particular α-olefins, of which ethene, propene, 1-butene or mixtures thereof are useful representatives. Of these, ethene is particularly preferred.

Beside the fact that the copolymers according to the present invention can be used in applications for engineering thermoplastics, they are also very useful in e.g. packaging.

The catalyst composition used comprises a source of palladium and an anionic phosphorus monodentate ligand of general formula R₁R₂P-R-X, wherein R₁ and R₂ independently represent an optionally polar substituted hydrocarbyl group, R is a bivalent bridging group having 2 carbon atoms in the bridge and X is an anionic group. The ligand is derived from an acid having a pKa of less than 4, preferably having a pKa of less than 2.

The source of palladium may be palladium as such or a palladium compound, suitably a palladium salt. Examples of useful palladium salts are palladium salts of a carboxylic acid. Palladium acetate is preferred.

Suitable anionic groups X of the phosphorus ligand are derived from organic acids, such as sulphonic acids and carboxylic acids. Of the anionic groups derived from these acids, the anionic group derived from sulphonic acid is preferred, i.e. the anionic group X of the general formula described above preferably is a sulphonate group, -SO₃⁻.

The groups R₁ and R₂ may be the same or different and they represent aliphatic or aromatic hydrocarbyl groups typically having up to 10 carbon atoms, such as e.g. alkyl, cycloalkyl, alkenyl, aryl, arylalkyl, alkylaryl or functionalized derivatives thereof. Also useful are polar substituted hydrocarbyl groups. The polar substituents may be, e.g. alkoxy groups typically having up to 6 carbon atoms, of which methoxy is a particularly suitable representative. It is preferred that R₁ and R₂ are the same, while in a most preferred embodiment of the present invention R₁ and R₂ both represent a phenyl group.

The bridging group R, finally, may be any bivalent group containing two carbon atoms in the bridge. Accordingly, R may be 1,2-ethylene, 1,2-propylene, 1,2-butylene or 2,3-butylene, and can also be 1,2-phenylene or 1-phenyl-1,2-ethylene. Preferred bridging groups are 1,2-ethylene and 1,2-phenylene.

The anionic phosphorus monodentate ligand is suitably incorporated in the form of an acid or as a salt, an acid being preferred.

In a particularly preferred embodiment of the present invention the phosphorus ligand used as component (b) of the catalyst composition is derived from 2-(diphenylphosphino)benzenesulphonic acid.

The process of the present invention may be carried out in the gaseous phase or in a liquid diluent, the last option being preferred. Suitable liquid diluents may be protic or aprotic diluents or mixtures thereof. Accordingly, useful protic diluents include lower alcohols, such as methanol and ethanol, while acetone, tetrahydrofuran and diglyme (bis(2-methoxyethyl)ether) are examples of useful aprotic diluents. If a palladium salt such as palladium acetate is used as the source of palladium, an additional organic acid having a pKa of less than 4 may be present as well for optimizing the catalytic activity of the catalyst composition. Such acid namely, may be helpful in removing the acetate groups from the palladium atom, which have not yet been replaced by the phosphorus monodentate ligand, so that the number of available catalytically active palladium sites can be increased. Particularly suitable for this purpose is a sulphonic acid, such as e.g. methanesulphonic acid, but other organic acids having a pKa of less than 4 may be used as well.

The amount of catalyst composition to be used in the process according to the present invention is not particularly critical and may vary within wide limits. Suitably, the amount of catalyst composition used is such that it contains in the range of from 10⁻⁷ to 10⁻³, and in particular 10⁻⁶ to 10⁻⁴, gram atom palladium per mol of olefinically unsaturated compound to be polymerized.

The process of the invention is preferably conducted at a temperature in the range of from 20 to 200 °C, more preferably 30 to 150 °C, while the pressure preferably is in the range of from 1 to 200 bar, more preferably 20 to 100 bar.

The invention is further illustrated by the following examples without restricting the invention to these specific embodiments.

### Example 1

A magnetically stirred autoclave having a capacity of 250 ml was charged with a catalyst solution comprising:
10 ml of methanol,
40 ml diglyme,
0.1 mmol of palladium acetate,
0.15 mmol of 2-(diphenylphosphino)benzenesulphonic acid.

Air was removed from the autoclave by evacuation, after which ethene was introduced until a pressure of 40 bar was reached. Subsequently, carbon monoxide was introduced until a pressure of 45 bar was reached. The autoclave was heated to 95 °C and polymerization was allowed to proceed for 10 hours, after which it was terminated by cooling to room temperature followed by releasing the pressure. The polymeric product thus obtained was filtered off, washed with methanol and dried in vacuo at room temperature. 3.5 gram of polymer was obtained having a melting point of 210 °C as determined with Differential Scanning Calorimetry (DSC), operated using a temperature gradient of 10 °C/min.

Analysis with MAS-¹³C NMR (Magic Angle Spinning-¹³C NMR) showed that a linear copolymer was obtained in which the molar ratio of monomer units originating in ethene and monomer units originating in carbon monoxide was 57.5:42.5. Thus, a total of 15% of the chemical bonds formed during polymerization was present as linkages between ethene units, 73% of which was contained in entities of two ethene units and the remaining 27% in entities of three or more ethene units. The remaining 85% of the bonds formed during polymerization were carbon monoxide-ethene linkages. The occurrence of branching was not detectable, implying that less than 0.5% of the ethene units carried a polymeric or another substituent.

### Example 2

A magnetically stirred autoclave having a capacity of 250 ml was charged with a catalyst solution comprising:
10 ml of methanol,
40 ml diglyme,
0.25 mmol of palladium acetate,
0.3 mmol of 2-(diphenylphosphino)benzenesulphonic acid, and
0.3 mmol methanesulphonic acid.

Air was removed from the autoclave by evacuation, after which ethene was introduced until a pressure of 40 bar was reached. Subsequently, the temperature was raised to 84 °C in 10 minutes and maintained for another 5 minutes to allow polymerization of ethene. 5 bar of carbon monoxide was then introduced and polymerization was allowed to continue for 6 hours at 84 °C, after which it was terminated by cooling to room temperature followed by releasing the pressure. The polymeric product thus obtained was filtered off, washed with methanol and dried in vacuo at room temperature. 5 gram of polymeric product was formed exhibiting two melting endotherms as determined with DSC, operated using a temperature gradient of 10 °C/min.: 125 °C and 225 °C.

Analysis with MAS-¹³C NMR showed that about 30% by weight of the polymeric product was polyethylene (m.p. 125 °C) and that the remaining portion was a linear copolymer A-B, with A being a polyethylene block and B being an ethylene/CO copolymer. The molar ratio of monomer units originating in ethene to monomer units originating in carbon monoxide was 55:45. Thus the polymer contained 10% of ethene-ethene linkages, the remaining 90% being carbon monoxide-ethene linkages (m.p. 225 °C).

Both polymers obtained may be separated e.g. by means of extraction.

### Comparative Example 1

The procedure of Example 1 was repeated except that after removal of air from the autoclave by evacuation ethene was introduced until a pressure of 20 bar was reached after which carbon monoxide was introduced until a pressure of 20 bar was reached. 7 gram of polymer was obtained having a melting point of 250 °C as determined with DSC having a temperature gradient of 10 °C/min.

Analysis with MAS-¹³C NMR showed that the linear copolymer contained no ethene-ethene linkages and was a perfectly alternating ethylene/CO copolymer.

## Claims

1. Copolymer of carbon monoxide and one or more olefinically unsaturated compounds, characterized in that the polymer chain is linear and contains monomer units originating in the olefinically unsaturated compound(s) and monomer units originating in carbon monoxide in a molar ratio of from 52.5:47.5 to 80:20, whereby at least in a part of the polymer chain these monomer units are arranged in a random order.

2. Copolymer according to claim 1, characterized in that said molar ratio amounts to from 53.5:46.5 to 70:30.

3. Copolymer according to claim 1 or 2, characterized in that of all bonds between monomer units originating in olefinically unsaturated compounds 50 to 95% is contained in entities consisting of two such monomer units.

4. Copolymer according to claim 1 or 2, characterized in that at least one end of the copolymer chain is a homopolymer block of the olefinically unsaturated monomer.

5. Copolymer according to claim 4, characterized in that one end of the copolymer chain is a homopolymer block of the olefinically unsaturated monomer.

6. Copolymer according to claim 4 or 5, characterized in that homopolymer end blocks constitute of from 10 to 50% by weight of the total copolymer.

7. Copolymer according to any one of claims 1-6, characterized in that the olefinically unsaturated monomer is an α-olefin.

8. Copolymer according to claim 7, characterized in that the α-olefin is ethene.

9. Process for the preparation of copolymers of carbon monoxide and one or more olefinically unsaturated compounds, of which copolymers the polymer chain is linear and contains monomer units originating in the olefinically unsaturated compound(s) and monomer units originating in carbon monoxide which are, at least in a part of the polymer chain, arranged in a random order, which process comprises contacting carbon monoxide and one or more olefinically unsaturated compounds in the presence of a catalyst composition comprising:
(a) a source of palladium, and
(b) an anionic phosphorus monodentate ligand of the general formula R₁R₂P-R-X, wherein R₁ and R₂ independently represent optionally polar substituted hydrocarbyl groups, R is a bivalent bridging group having 2 carbon atoms in the bridge and X is an anionic group, which anionic ligand is derived from an acid having a pKa of less than 4,
wherein the molar ratio of carbon monoxide to the olefinically unsaturated compound(s) is in the range of from 1:30 to 1:3.

10. Process according to claim 9, wherein that the molar ratio carbon monoxide:olefinically unsaturated compound is in the range of from 1:15 to 1:5.

11. Process according to claim 9 or 10, characterized in that R₁ and R₂ both represent phenyl groups.

12. Process according to any one of claims 9-11, characterized in that R is selected from the group consisting of 1,2-ethylene and 1,2-phenylene and in that the anionic group X is a sulphonate group -SO₃⁻.

13. Process according to any one of claims 9-12, characterized in that component (b) of the catalyst composition is derived from 2-(diphenylphosphino)benzenesulphonic acid.

## Patentansprüche

1. Copolymer aus Kohlenmonoxid und aus einer oder mehreren olefinisch ungesättigten Verbindungen, dadurch gekennzeichnet, daß die Polymerkette linear ist und die Monomereinheiten, die von der bzw. von den olefinisch ungesättigten Verbindung bzw. Verbindungen abstammt bzw. abstammen, und die Monomereinheiten, die von Kohlenmonoxid abstammen, in einem Molverhältnis von 52,5:47,5 bis 80:20 enthält, wobei in wenigstens einem Teil der Polymerkette diese Monomereinheiten in einer statistischen Anordnung vorliegen.

2. Copolymer nach Anspruch 1, dadurch gekennzeichnet, daß das Molverhältnis 53,5:46,5 bis 70:30 beträgt.

3. Copolymer nach Anspruch 1 oder 2, dadurch gekennzeichnet, daß 50 bis 95 % aller Bindungen zwischen Monomereinheiten, die von olefinisch ungesättigten Verbindungen abstammen, in Anteilen enthalten sind, die aus zwei derartigen Monomereinheiten bestehen.

4. Copolymer nach Anspruch 1 oder 2, dadurch gekennzeichnet, daß wenigstens ein Ende der Copolymerkette ein Homopolymerblock aus dem olefinisch ungesättigten Monomer ist.

5. Copolymer nach Anspruch 4, dadurch gekennzeichnet, daß ein Ende der Copolymerkette ein Homopolymerblock aus dem olefinisch ungesättigten Monomer ist.

6. Copolymer nach Anspruch 4 oder 5, dadurch gekennzeichnet, daß die Homopolymerendblöcke 10 bis 50 Gew.-% des Gesamt-copolymers ausmachen.

7. Copolymer nach einem der Ansprüche 1 bis 6, dadurch gekennzeichnet, daß das olefinisch ungesättigte Monomer ein α-Olefin ist.

8. Copolymer nach Anspruch 7, dadurch gekennzeichnet, daß das α-Olefin Ethen ist.

9. Verfahren zur Herstellung von Copolymeren aus Kohlenmonoxid und einer oder mehreren olefinisch ungesättigten Verbindungen, bei welchen Copolymeren die Polymerkette linear ist und aus dem olefinisch ungesättigten Verbindungen herrührende Monomereinheiten und aus Kohlenmonoxid herrührende Monomereinheiten enthält, die, zumindest in einem Teil der Polymerkette, statistisch angeordnet sind, welches Verfahren ein Inkontaktbringen von Kohlenmonoxid mit einer oder mit mehreren olefinisch ungesättigten Verbindungen in Anwesenheit einer Katalysatorzusammensetzung umfaßt, die
(a) eine Palladiumquelle und
(b) einen anionischen Phosphormonodentatliganden mit der allgemeinen Formel R₁R₂P-R-X umfaßt, worin R₁ und R₂ unabhängig voneinander gegebenenfalls polar substituierte Hydrocarbylgruppen darstellen, R eine zweiwertige Brückengruppe mit zwei Kohlenstoffatomen in der Brücke bezeichnet und X eine anionische Gruppe ist, welcher anionischer Ligand von einer Säure mit einem pKa-Wert von kleiner als 4 abgeleitet ist,
worin das Molverhältnis von Kohlenmonoxid zu der olefinisch ungesättigten Verbindung bzw. zu den olefinisch ungesättigten Verbindungen im Bereich von 1:30 bis 1:3 liegt.

10. Verfahren nach Anspruch 9, worin das Molverhältnis von Kohlenmonoxid zu olefinisch ungesättigter Verbindung im Bereich von 1:15 bis 1:5 liegt.

11. Verfahren nach Anspruch 9 oder 10, dadurch gekennzeichnet, daß R₁ und R₂ beide Phenylgruppen bedeuten.

12. Verfahren nach einen der Ansprüche 9 bis 11, dadurch gekennzeichnet, daß R aus der aus 1,2-Ethylen und 1,2-Phenylen bestehenden Gruppe ausgewählt ist und daß die anionische Gruppe X eine Sulfonatgruppe -SO₃⁻ ist.

13. Verfahren nach einen der Ansprüche 9 bis 12, dadurch gekennzeichnet, daß die Komponente (b) der Katalysatorzusammensetzung von 2-(Diphenylphosphino)benzolsulfonsäure abgeleitet ist.

## Revendications

1. Copolymère de monoxyde de carbone et d'un ou plusieurs composés oléfiniquement insaturés, caractérisé en ce que la chaîne de polymère est linéaire et contient des unités de monomère issues du ou des composés oléfiniquement insaturés et des unités de monomère issues du monoxyde de carbone dans un rapport molaire de 52,5/47,5 à 80/20, de sorte qu'au moins dans une partie de la chaîne de polymère ces unités de monomère sont agencées dans un ordre désordonné.

2. Copolymère suivant la revendication 1, caractérisé en ce que le rapport molaire précité s'élève de 53,5/46,5 à 70/30.

3. Copolymère suivant l'une ou l'autre des revendications 1 et 2, caractérisé en ce que de toutes les liaisons entre les unités de monomère issues des composés oléfiniquement insaturés 50 à 95 % sont contenus sous forme d'entités formées de deux de ces unités de monomère.

4. Copolymère suivant l'une ou l'autre des revendications 1 et 2, caractérisé en ce qu'au moins une extrémité de la chaîne de copolymère est un bloc d'homopolymère du monomère oléfiniquement insaturé.

5. Copolymère suivant la revendication 4, caractérisé en ce qu'une extrémité de la chaîne de copolymère est un bloc d'homopolymère du monomère oléfiniquement insaturé.

6. Copolymère suivant l'une ou l'autre des revendications 4 et 5, caractérisé en ce que les blocs d'extrémité d'homopolymère constituent de 10 à 50 % en poids du copolymère total.

7. Copolymère suivant l'une quelconque des revendications 1 et 6, caractérisé en ce que le monomère oléfiniquement insaturé est une α-oléfine.

8. Copolymère suivant la revendication 7, caractérisé en ce que l'α-oléfine est de l'éthène.

9. Procédé de préparation de copolymères de monoxyde de carbone et d'un ou plusieurs composés oléfiniquement insaturés, copolymères dont la chaîne de polymère est linéaire et contient des unités de monomère issues du ou des composés oléfiniquement insaturés et des unités de monomère issues du monoxyde de carbone qui sont, au moins dans une partie de la chaîne de polymère, agencées dans un ordre désordonné, lequel procédé comprend la mise en contact de monoxyde de carbone et d'un ou plusieurs composés oléfiniquement insaturés en présence d'une composition de catalyseur comprenant :
a) une source de palladium, et
b) un ligand monodenté de phosphore anionique de la formule générale R₁R₂P-R-X, dans laquelle R₁ et R₂ représentent indépendamment des groupes hydrocarbyle substitués éventuellement polaires, R est un groupe de pontage bivalent comportant 2 atomes de carbone dans le pont et X est un groupe anionique, lequel ligand anionique provient d'un acide ayant un pKa inférieur à 4,
dans lequel le rapport molaire du monoxyde de carbone au(x) composé(s) oléfiniquement insaturé(s) se situe dans la gamme de 1/30 à 1/3.

10. Procédé suivant la revendication 9, dans lequel le rapport molaire du monoxyde de carbone/composé oléfiniquement insaturé se situe dans la gamme de 1/15 à 1/5.

11. Procédé suivant l'une ou l'autre des revendications 9 et 10, caractérisé en ce que R₁ et R₂ représentent tous deux des groupes phényle.

12. Procédé suivant l'une quelconque des revendications 9 à 11, caractérisé en ce que R est choisi dans le groupe comprenant le 1,2-éthylène et le 1,2-phénylène et en ce que le groupe anionique X est un groupe sulfonate -SO³⁻.

13. Procédé suivant l'une quelconque des revendications 9 à 12, caractérisé en ce que le composant (b) de la composition de catalyseur provient d'acide 2-(diphénylphosphino)benzènesulfonique.
